# DEMANDE DE BREVET EUROPEEN

(11) **EP 1 219 798 A2**
(43) Date de publication de la demande: **03.07.2002**
(21) Numéro de dépôt: 01403250.2
(22) Date de dépôt: 14.12.2001
(51) Int. Cl.: F02B 31/04, F02B 31/08

(54) **Système d'admission de gaz d'un moteur à combustion**

(30) Priorité: 28.12.2000 FR 0017152
(71) Demandeur: Renault, 92100 Boulogne Billancourt (FR)
(72) Inventeur: Pradere, Thierry, 91300 Massy (FR)

(57) **Abrégé**

L'invention propose un système d'admission de gaz dans une chambre de combustion (22), qui comporte un conduit d'admission (24) des gaz, du type qui comporte un tronçon amont (26), et qui se divise en deux tronçons aval (28, 30) qui débouchent dans la chambre (22) par deux orifices (32, 34) chacun obturés par une soupape d'admission (36, 38) respectivement, et du type dans fequel l'intérieur du tronçon amont (26) comporte au moins une lame de séparation (60) de façon à former deux couloirs d'écoulement (62, 64) correspondant aux tronçons aval (28, 30), et qui comporte une zone de passage (66) des gaz entre les deux couloirs (62, 64),
caractérisé en ce qu'au moins le premier tronçon aval (28) comporte une cloison (72) qui le divise en deux zones d'admission (68, 70) pour que, lorsque le second tronçon aval (30) est au moins partiellement obturé par la soupape (38) correspondante, le débit des gaz est plus élevé dans une des zones d'admission (68).

## Description

L'invention concerne un système d'admission de gaz dans au moins une chambre de combustion d'un cylindre d'un moteur à combustion.

Les moteurs à essence, notamment les moteurs à injection directe, permettent d'optimiser le fonctionnement du moteur avec des mélanges dits "pauvres", c'est-à-dire des mélanges carburés dans lesquels il existe un fort excès de gaz comburant, tel que de l'air, par rapport à la quantité de carburant introduite dans le cylindre.

L'utilisation des mélanges pauvres permet notamment de réduire de manière importante la consommation de carburant, mais aussi de réduire la température maximale atteinte au cours de la combustion, ce qui permet de diminuer la production de substances polluantes telles que les oxydes d'azote (NOx).

De même, l'excès de gaz permet d'éviter qu'une partie du carburant reste imbrûlée après la combustion et soit évacuée avec les gaz d'échappement.

Dans les moteurs diesel, l'allumage se fait par auto inflammation du carburant dans des zones dans lesquelles le mélange gaz/carburant est riche.

L'optimisation de la combustion dans les moteurs diesel implique notamment de favoriser le mélange air/carburant et d'amener ainsi de l'air autour des jets de carburant.

Dans ce but, il est connu de favoriser le mélange de l'air et du carburant par la formation, dans le cylindre, d'un mouvement tourbillonnaire dit de "swirl" dans lequel les gaz contenus dans le cylindre sont animés d'un mouvement de rotation autour d'un axe sensiblement parallèle à l'axe du cylindre.

Pour aboutir à un fonctionnement optimal du moteur, il est nécessaire de considérer l'ensemble des paramètres qui régissent l'aérodynamique interne du cylindre, c'est-à-dire l'écoulement des différents fluides dans le cylindre au cours d'un cycle moteur, en tenant notamment compte de la forme de la culasse, des ouvertures et fermetures des soupapes d'admission et d'échappement, de la position et de l'orientation de l'injecteur et des mouvements alternatifs du piston.

Le mouvement tourbillonnaire est notamment créé en fin de compression, et particulièrement durant la phase d'injection du carburant, par l'écoulement des gaz dans la chambre de combustion réalisée dans la tête du piston.

Le mouvement de "swirl" créé au cours de la phase d'admission du carburant nécessite aussi un tracé particulier du système d'admission.

Les systèmes d'admission existant permettent l'obtention d'un mouvement de "swirl" à l'aide de conduits du type "hélicoïdal" ou "tangentiel". Des dispositifs agencés dans les conduits permettent aussi d'augmenter les turbulences. II s'agit notamment d'un boisseau rotatif, d'une guillotine, d'un volet mobile...

Cependant, ces systèmes ont une perméabilité qui est réduite. La perméabilité étant définie comme étant le débit de passage des gaz dans l'orifice d'entrée d'une soupape lors de son ouverture, une perméabilité réduite entraîne une dégradation du remplissage en air des chambres de combustion du moteur, notamment aux fortes charges. En effet, dans ce cas, la quantité des gaz admise dans le cylindre est inférieure à la quantité des gaz qui est nécessaire à la bonne combustion du mélange gaz/carburant.

Dans le but de fournir une solution à ce problème, l'invention propose un système d'admission de gaz dans au moins une chambre de combustion d'un cylindre d'un moteur à combustion, qui comporte un conduit d'admission des gaz, notamment d'air, du type qui comporte un tronçon amont, par rapport à la direction d'écoulement des gaz, et qui se divise en au moins un premier et un second tronçon aval qui débouchent dans la chambre par un premier et un second orifices d'entrée obturés par une première et une seconde soupapes d'admission respectivement, et excentrés par rapport à l'axe du cylindre, et du type dans lequel l'intérieur du tronçon amont comporte au moins une lame de séparation de façon à former un premier et un second couloirs d'écoulement correspondant au premier et au second tronçons aval, et qui comporte une zone de passage des gaz entre les deux couloirs qui s'étend entre l'extrémité aval de la lame de séparation et l'amont des premier et second tronçons aval, caractérisé en ce qu'au moins le premier tronçon aval comporte une première cloison qui le divise en une première et en une seconde zones d'admission pour que, lorsque le second tronçon aval est au moins partiellement obturé par la soupape correspondante, le flux de gaz qui circule dans le second couloir traverse la zone de passage vers le premier couloir de façon que le débit des gaz soit plus élevé dans une zone d'admission du premier tronçon aval que dans l'autre.

Selon d'autres caractéristiques de l'invention :
- le second tronçon aval comporte une seconde cloison qui le divise en une première et en une seconde zones d'admission pour que, lorsque le premier tronçon aval est au moins partiellement obturé par la soupape correspondante, le flux de gaz qui circule dans le premier couloir traverse la zone de passage vers le second couloir de façon que le débit des gaz soit plus élevé dans une zone d'admission du second tronçon aval que dans l'autre ;
- au moins une cloison de séparation d'un tronçon aval s'étend dans un plan sensiblement parallèle à l'axe du cylindre et à la direction générale dudit tronçon aval, de façon que, lorsque l'orifice d'entrée de l'autre tronçon aval est au moins partiellement obturé par la soupape correspondante, le débit des gaz est plus élevé dans la zone d'admission située à proximité de la paroi tubulaire du cylindre de manière à provoquer dans le cylindre un mouvement tourbillonnaire dit de "swirl" dans lequel les gaz contenus dans le cylindre sont animés d'un mouvement de rotation autour d'un axe sensiblement parallèle à l'axe du cylindre ;
- le système comporte des moyens d'obturation commandés entre une position ouverte, dans laquelle le débit des gaz est réparti de façon sensiblement égale entre les deux couloirs, et une position fermée, dans laquelle il obture un couloir pour que la totalité du débit des gaz circule dans l'autre couloir ;
- les moyens d'obturation comportent un volet articulé autour d'un axe sensiblement perpendiculaire à la direction générale de l'écoulement des gaz dans le tronçon amont ;
- les moyens d'obturation comportent une vanne de type à boisseau ;
- l'une des extrémités longitudinales de la lame de séparation, formant moyens d'obturation, est libre et est mobile entre une position ouverte et, deux positions fermées qui sont situées de part et d'autre de la position ouverte, de façon que l'un ou l'autre couloir soit obturé respectivement ;
- la lame de séparation comporte deux parties dont l'une est fixe et dont l'autre est articulée autour d'un axe de façon à former des moyens d'obturation ;
- la partie amont de la lame de séparation est fixe, et sa partie amont est mobile ;
- lorsque les moyens d'obturation obturent au moins partiellement le couloir correspondant au tronçon aval de l'orifice d'entrée qui est ouvert, le flux de gaz qui circule dans le couloir correspondant au tronçon aval de l'orifice d'entrée qui est au moins partiellement obturé, traverse la zone de passage vers l'autre couloir de façon que le débit des gaz soit plus élevé dans une zone d'admission du tronçon aval de l'orifice d'entrée qui est ouvert.

D'autres caractéristiques et avantages de l'invention apparaîtront à la lecture de la description détaillée qui suit pour la compréhension de laquelle on se reportera aux dessins annexés dans lesquels :
- la figure 1 représente une vue schématique en coupe axiale illustrant un cylindre d'un moteur équipé d'un système d'admission selon l'état de la technique ;
- la figure 2 est une vue schématique en coupe d'un conduit d'admission, selon l'invention, qui alimente la chambre de combustion par deux orifices ;
- les figures 3 à 7 sont des vues schématiques en coupe, similaires à celle représentée à la figure 2, selon des variantes de l'invention.

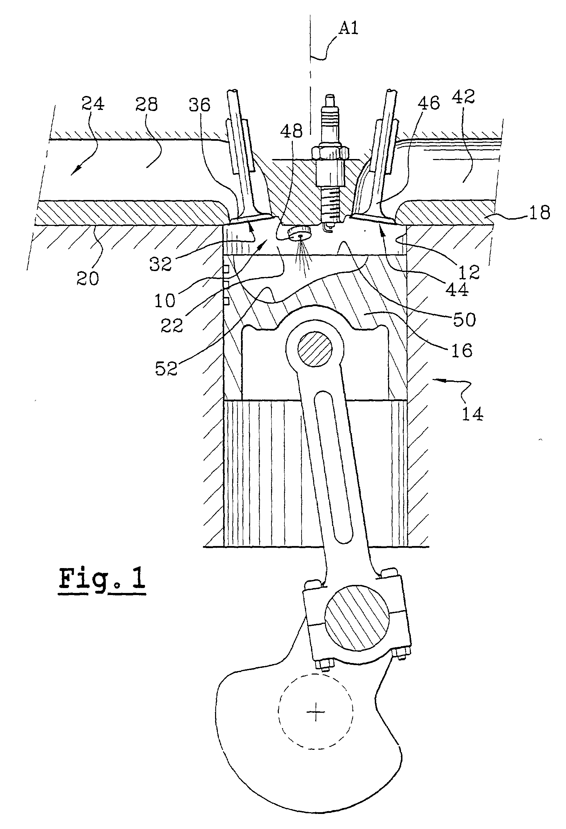

Dans la description qui suit, une orientation supérieure, inférieure sera utilisée conformément à l'orientation haut, bas de la figure 1. De plus, afin de faciliter la compréhension de la description ainsi que des revendications, on utilisera une orientation amont, aval correspondant à la direction générale de l'écoulement des gaz dans le système d'admission.

La description traite d'un moteur à essence à injection directe, cependant elle n'est pas limitative. L'invention peut s'appliquer à différents types de moteurs tels qu'à un moteur à essence à injection directe ou un moteur diesel.

Le cylindre 10 est réalisé sous la forme d'un alésage 12 cylindrique d'axe vertical A1 aménagé dans un bloc-moteur 14. Un piston 16 est animé d'un mouvement alternatif axial dans l'alésage 12 et il délimite, vers le bas, le volume du cylindre. Le bloc-moteur 14 est recouvert d'une culasse 18 dont une face inférieure 20 délimite vers le haut le cylindre 10.

L'espace situé entre le piston 16, la culasse 18 et le cylindre 10 est appelé chambre de combustion 22.

Le cylindre 10 du moteur comporte un conduit d'admission 24 des gaz, notamment d'air.

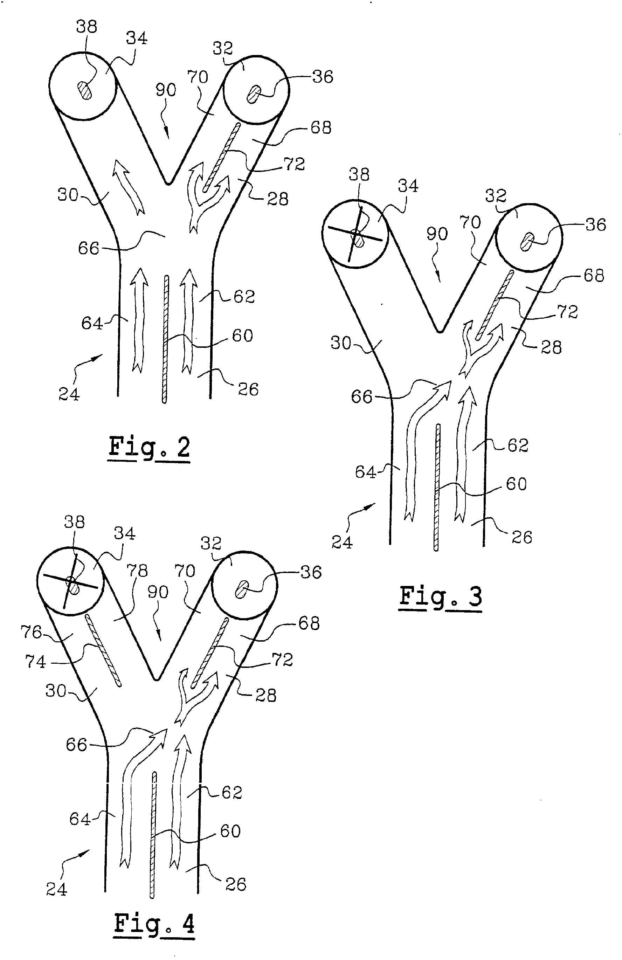

Le conduit d'admission 24, représenté aux figures 2 à 6, comporte un tronçon amont 26 et qui se divise en un premier et un second tronçons aval 28 et 30, qui débouchent dans la chambre de combustion 22 par un premier et un second orifices d'entrée 32 et 34 obturés par une première et une seconde soupapes d'admission 36 et 38 respectivement.

Les premier et second orifices 32, 34 sont excentrés par rapport à l'axe A1 du cylindre 10.

Le cylindre 10 comporte aussi une bougie d'allumage à étincelles, qui peut être agencée sensiblement selon l'axe A1 du cylindre.

Par ailleurs, la culasse 18 comporte aussi un conduit d'échappement 42 des gaz brûlés qui débouche par un orifice de sortie 44 dans la face inférieure 20 de la culasse. Chacun des orifices de sortie 44 du conduit d'échappement 42 est destiné à être obturé par une soupape d'échappement 46 qui présente, par exemple, un diamètre supérieur au diamètre des soupapes d'admission 36 et 38.

S'agissant d'un moteur à injection directe, le cylindre 10 comporte aussi un injecteur de carburant dont le nez 48 débouche directement dans la chambre 22.

Comme on peut le voir sur la figure 1, le piston 16 comporte, dans sa face supérieure 50, un évidement concave 52 (aussi appelé bol) qui, en vue de dessus, présente une forme sensiblement circulaire. L'évidement 52 est excentré par rapport à l'axe A1 du cylindre. En effet, il est intéressant que l'injecteur et l'évidement 52 soient agencés de telle sorte que l'axe d'injection de carburant de l'injecteur arrive de manière à peu près tangentielle à la surface latérale de l'évidement 52, vers l'intérieur de celui-ci.

De façon à favoriser le mouvement tourbillonnaire de swirl dans la chambre de combustion 22, il est connu d'agencer à l'intérieur du conduit d'admission 24 des dispositifs, non représentés, tels que des boisseaux rotatifs, des guillotines ou des volets. Ces dispositifs provoquent des mouvements aérodynamiques des gaz à l'intérieur du conduit d'admission 24 qui favorisent le mouvement tourbillonnaire de swirl dans la chambre de combustion 22.

Cependant, ces dispositifs provoquent une perte de charge qui pénalise fortement la perméabilité du conduit d'admission 24, notamment lorsque le moteur fonctionne à forte charge. En effet, les turbulences formées dans le conduit d'admission 24 diminuent l'écoulement des gaz.

Il est aussi connu d'agencer une lame de séparation à l'intérieur du tronçon amont 26 du conduit d'admission 24, de façon à former un premier et un second couloirs d'écoulement correspondant aux premier et second tronçons aval 28, 30. La lame de séparation permet de répartir le flux de gaz entre les tronçons aval 28 et 30 et les premier et second orifices d'entrée 32 et 34.

Cependant, un tel dispositif ne permet pas de favoriser suffisamment le mouvement tourbillonnaire de swirl dans la chambre de combustion 22, notamment aux faibles charges.

Selon l'invention, le tronçon amont 26 comporte une lame de séparation 60 de façon à former un premier et un second couloirs d'écoulement 62 et 64 qui correspondent au premier 28 et au second 34 tronçons aval respectivement.

De façon équivalente non représentée, le tronçon amont 26 peut comporter deux tronçons séparés qui correspondent chacun à un couloir d'écoulement 62 et 64 respectivement.

Une zone de passage 66 s'étend entre l'extrémité aval de la lame de séparation 60 et l'amont des premier 28 et second 30 tronçons aval de façon que, dans certains cas, les gaz puissent passer entre les tronçons 28 et 30.

Conformément aux figures 2 et 3, la lame de séparation 60 délimite deux couloirs d'écoulement 62 et 64 qui sont sensiblement symétriques.

Selon une autre conception, non représentée, du système d'admission, cette symétrie peut ne pas être respectée. Ainsi les dimensions des premier et second tronçons aval 28 et 30 peuvent être différentes.

Les figures 2 et 3 illustrent une réalisation de l'invention. Le premier tronçon aval 28, est divisé en une première 68 et une seconde 70 zones d'admission par une première cloison 72. Les flux de gaz qui passent de chaque côtés de la queue de la première soupape 36 sont alors séparés par la première cloison 72.

La lame de séparation 60 ainsi que la première cloison 72 peuvent être réalisées directement par fonderie, ou être rapportées à l'intérieur du tronçon amont 26 et du premier tronçon aval 28 respectivement.

Lorsque le moteur fonctionne à fortes charges, les deux soupapes 36 et 38 sont ouvertes, conformément à la figure 2, de façon à permettre l'introduction de la quantité maximale d'air à l'intérieur de la chambre de combustion 22. La présence de la lame de séparation 60 et de la première cloison 72 ne provoque quasiment aucune perte de charge de façon que la perméabilité du système d'admission soit maximale. Ainsi, les flux de gaz qui circulent dans les premier et second couloirs d'écoulement 62 et 64 traversent les premier et second orifices d'entrée 32 et 34 de la première et de la seconde soupapes d'admission 36 et 38 respectivement.

Lorsque le moteur fonctionne à faible charge, le premier orifice d'entrée 32 a une section suffisamment importante et une perméabilité suffisamment élevée pour laisser passer la quantité d'air permettant un fonctionnement optimal.

Ainsi, lorsque les conditions de fonctionnement du moteur nécessitent un mouvement tourbillonnaire de swirl élevé, la seconde soupape 38 peut être au moins partiellement fermée.

Dans la suite de la description ont considérera que la seconde soupape 38 est totalement fermée de façon à obturer le second orifice 34.

Conformément à la figure 3, le flux de gaz qui circule dans le second couloir d'écoulement 64 ne peut plus être évacué par le second orifice 34 de la seconde soupape 38. Il traverse alors la zone de passage 66.

Lorsque le flux de gaz qui circule dans le second couloir d'écoulement 64 franchit la zone de passage 66, il est orienté globalement perpendiculairement à la zone de passage 66.

Lorsqu'il arrive dans le premier couloir d'écoulement 62, il provoque alors la déviation du flux de gaz qui y circule en direction de la paroi extérieure dudit couloir 62. Ainsi, le débit des gaz est plus élevé dans la première zone d'admission 68 du premier tronçon aval 28 que dans la seconde zone d'admission 70.

La première cloison de séparation 72 du premier tronçon aval 28 s'étend de préférence dans un plan sensiblement parallèle à l'axe A1 du cylindre et à la direction générale du premier tronçon aval 28.

Ainsi, le débit des gaz étant plus élevé dans la première zone d'admission 68 qui est plus excentrée par rapport à l'axe A1 du cylindre 10, c'est-à-dire située à proximité de la paroi tubulaire du cylindre 10, cela permet au débit des gaz qui y circulent de favoriser, à l'intérieur de la chambre de combustion 22, le mouvement tourbillonnaire de swirl dans lequel les gaz contenus dans le cylindre 10 sont animés d'un mouvement de rotation autour d'un axe sensiblement parallèle à l'axe A1 du cylindre 10.

Ainsi, l'invention permet, sans diminuer la perméabilité du système d'admission aux fortes charges, de favoriser le mouvement tourbillonnaire de swirl à l'intérieur de la chambre de combustion 22, aux faibles charges.

La description qui précède concerne une première cloison 72 réalisée dans ie premier tronçon aval 28. De façon similaire la cloison peut être réalisée dans le second tronçon aval 30.

Les longueurs de la lame de séparation 60, de la première cloison 70 et de la zone de passage 66, ainsi que l'angle défini par les directions générales des premier et second tronçons aval 28 et 30 et la géométrie desdits tronçons 28, 30 sont des paramètres qui influent sur la formation du mouvement tourbillonnaire de swirl.

La présence de la première cloison 72 permet de s'affranchir de la longueur du premier tronçon aval 28. En effet, lorsque la seconde soupape 38 est obturée, la répartition du débit des gaz entre la première 68 et la seconde 70 zones d'admission est essentiellement due à la distance qui sépare la zone de passage 68 de l'extrémité amont de la première cloison 72.

Selon une variante représentée à la figure 4, le système d'admission comporte en plus de la première cloison 72, une seconde cloison 74 qui divise le second tronçon aval 30 en une première 76 et une seconde 78 zones d'admission.

Un tel système d'admission permet alors un fonctionnement alterné, c'est-à-dire que les première et seconde soupapes 36 et 38 sont alternativement en position ouverte et fermée.

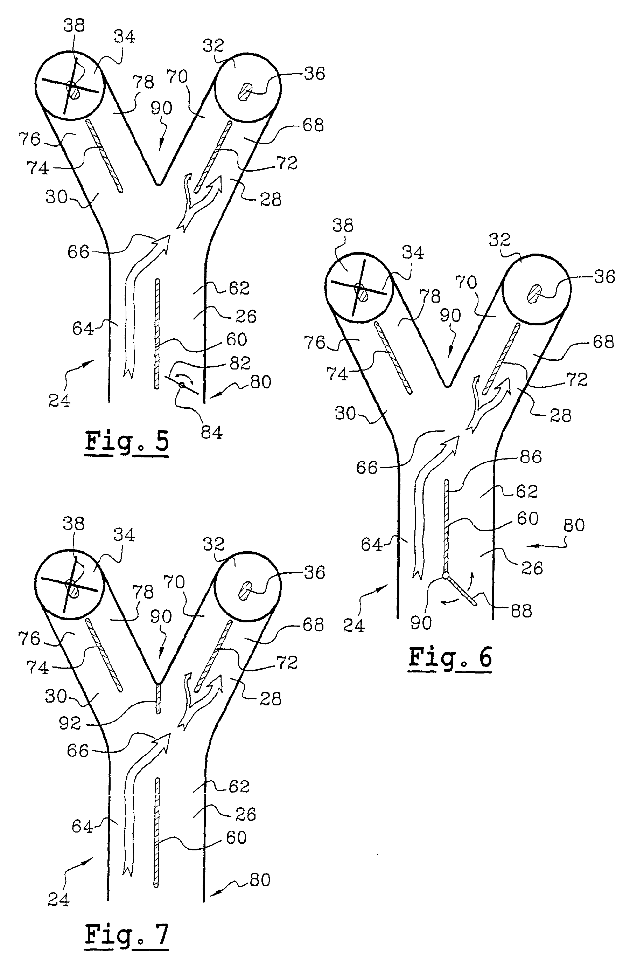

Les figures 5 et 6 proposent des systèmes d'admission qui comportent des moyens d'obturation 80 qui sont commandés entre une position ouverte dans laquelle le débit des gaz est réparti de façon sensiblement égale entre le premier et le second couloirs d'écoulement 62, 64, et une position fermée dans laquelle ils obturent un couloir pour que la totalité du débit des gaz circule dans l'autre couloir.

Conformément à la figure 5, les moyens d'obturation 80 sont situés dans le premier tronçon amont 62 et comportent un volet 82.

Le volet 82 est avantageusement articulé autour d'un axe 84 sensiblement perpendiculaire à la direction générale de l'écoulement des gaz dans le premier tronçon amont 26.

Un tel système d'admission des gaz permet de rendre variable l'intensité du mouvement tourbillonnaire de swirl.

Lorsque la seconde soupape 38 est fermée, et que les moyens d'obturation 80 sont en position ouverte, le système d'admission des gaz fonctionne de façon similaire à celle décrite précédemment.

Lorsque l'on veut augmenter le mouvement tourbillonnaire de swirl à l'intérieur de la chambre de combustion 22, de façon à améliorer la combustion du mélange gaz/carburant, on commande les moyens d'obturation 80, de façon que le volet 82 obture progressivement le premier couloir d'écoulement 62.

Le premier couloir d'écoulement 62 étant partiellement obturé par le volet 82, le flux de gaz qui circule dans le conduit d'admission 24 est majoritairement orienté dans le second couloir d'écoulement 64. Le flux majoritaire traverse ensuite la zone de passage 66, et se dirige de préférence vers la première zone d'admission 68 du second tronçon aval 28 entraînant le flux de gaz qui circule encore dans le premier couloir d'écoulement 62, vers la paroi extérieure du couloir 62. Le flux de gaz qui circulent dans la première zone d'admission 68 du second tronçon aval 28 est alors plus important que celui décrit précédemment, le mouvement tourbillonnaire de swirl est alors augmenté.

Le mouvement tourbillonnaire de swirl maximal est obtenu lorsque le dispositif d'obturation 80 est en position fermée.

De façon similaire, d'autres types de moyens d'obturation 80 tels qu'une vanne de type à boisseau ou un volet mobile peuvent être utilisés.

Selon une variante, l'invention propose que l'une des extrémités longitudinales de la lame de séparation 60, soit libre et mobile entre une position ouverte et deux positions fermées de façon à former moyens d'obturation 80.

Conformément à la figure 6, la lame de séparation 60 peut comporter deux parties dont l'une 86 est fixe, et dont l'autre 88 est mobile et articulée autour d'un axe 90.

Les deux positions fermées de la partie mobile 88 sont situées de part et d'autre de la position ouverte. Ainsi, dans chacune de ses positions fermées, la partie mobile 88 de la lame de séparation 60 obture soit le premier couloir d'écoulement 62, conformément à la figure 6, soit le second couloir d'écoulement 64.

Un seul dispositif formant moyens d'obturation 80 est alors nécessaire pour obturer l'un ou l'autre du premier ou du second couloir d'écoulement 62, 64.

La partie mobile 88 peut être une partie amont ou une partie aval de la lame de séparation 60.

Conformément aux figures, la séparation du tronçon amont 26 a la forme d'un V 90.

De façon à augmenter le débit des gaz dans la zone d'admission 68 du premier tronçon aval 28, il est aussi possible de modifier les dimensions de la zone de passage 66 ainsi que sa position par rapport à la première cloison 72 et la seconde cloison 74.

Pour ce faire il est possible de modifier la forme en V 90. Il est encore possible, conformément à la figure 7, d'agencer une lame de séparation supplémentaire 92 qui s'étend dans le tronçon amont 26 du sommet de la forme V 90 vers la lame de séparation 60.

Ainsi, le flux de gaz circule dans le second couloir d'écoulement 64 puis traverse la zone de passage 66, et se dirige de préférence vers la première zone d'admission 68 du second tronçon aval 28 entraînant le flux de gaz qui circule dans le premier couloir d'écoulement 62, vers sa paroi extérieure.

En augmentant le flux de gaz qui circule dans la première zone d'admission 68, la lame de séparation supplémentaire 92 permet d'augmenter le mouvement tourbillonnaire de swirl à l'intérieur de la chambre de combustion 22.

Ainsi, il est possible de contrôler et de favoriser le mouvement tourbillonnaire de swirl à l'intérieur de la chambre de combustion 22 du moteur, sans diminuer la perméabilité du système d'admission, lors du fonctionnement à pleine charge du moteur.

## Revendications

1. Système d'admission de gaz dans au moins une chambre de combustion (22) d'un cylindre (10) d'un moteur à combustion, qui comporte un conduit d'admission (24) des gaz, notamment d'air, du type qui comporte un tronçon amont (26), par rapport à la direction d'écoulement des gaz, et qui se divise en au moins un premier et un second tronçons aval (28, 30) qui débouchent dans la chambre (22) par un premier et un second orifices d'entrée (32, 34) obturés par une première et une seconde soupapes d'admission (36, 38) respectivement, et excentrés par rapport à l'axe (A1) du cylindre (10), et du type dans lequel l'intérieur du tronçon amont (26) comporte au moins une lame de séparation (60) de façon à former un premier et un second couloirs d'écoulement (62, 64) correspondant au premier et au second tronçons aval (28, 30), et qui comporte une zone de passage (66) des gaz entre les deux couloirs (62, 64) qui s'étend entre l'extrémité aval de la lame de séparation (60) et l'amont des premier et second tronçons aval (28, 30),
**caractérisé en ce qu'**au moins le premier tronçon aval (28) comporte une première cloison (72) qui le divise en une première et en une seconde zones d'admission (68, 70) pour que, lorsque le second tronçon aval (30) est au moins partiellement obturé par la soupape (38) correspondante, le flux de gaz qui circule dans le second couloir (64) traverse la zone de passage (66) vers le premier couloir (62) de façon que le débit des gaz soit plus élevé dans une zone d'admission (68) du premier tronçon aval (28) que dans l'autre (70).

2. Système d'admission selon la revendication précédente, **caractérisé en ce que** le second tronçon aval (30) comporte une seconde cloison (74) qui le divise en une première et en une seconde zones d'admission (76, 78) pour que, lorsque le premier tronçon aval (28) est au moins partiellement obturé par la soupape (36) correspondante, le flux de gaz qui circule dans le premier couloir (62) traverse la zone de passage (66) vers le second couloir (64) de façon que le débit des gaz soit plus élevé dans une zone d'admission (76) du second tronçon aval (30) que dans l'autre (78).

3. Système d'admission selon l'une des revendications 1 ou 2, **caractérisé en ce qu'**au moins une cloison de séparation (72, 74) d'un tronçon aval (28, 30) s'étend dans un plan sensiblement parallèle à l'axe du cylindre (10) et à la direction générale dudit tronçon aval (28, 30), de façon que, lorsque l'orifice d'entrée (32, 34) de l'autre tronçon aval (30, 28) est au moins partiellement obturé par la soupape (38, 36) correspondante, le débit des gaz est plus élevé dans la zone d'admission (68, 70) située à proximité de la paroi tubulaire du cylindre (10) de manière à provoquer dans le cylindre (10) un mouvement tourbillonnaire dit de "swirl" dans lequel les gaz contenus dans le cylindre (10) sont animés d'un mouvement de rotation autour d'un axe sensiblement parallèle à l'axe (A1) du cylindre.

4. Système d'admission selon l'une quelconque des revendications précédentes, **caractérisé en ce qu'**il comporte des moyens d'obturation (80) commandés entre une position ouverte, dans laquelle le débit des gaz est réparti de façon sensiblement égale entre les deux couloirs (62, 64), et une position fermée, dans laquelle il obture un couloir (62) pour que la totalité du débit des gaz circule dans l'autre couloir (64).

5. Système d'admission selon la revendication précédente, **caractérisé en ce que** les moyens d'obturation (80) comportent un volet (82) articulé autour d'un axe (84) sensiblement perpendiculaire à la direction générale de l'écoulement des gaz dans le tronçon amont (26).

6. Système d'admission selon la revendication 4, **caractérisé en ce que** les moyens d'obturation (80) comportent une vanne de type à boisseau.

7. Système d'admission selon la revendication 4, **caractérisé en ce que** l'une des extrémités longitudinales de la lame de séparation (60), formant moyens d'obturation (80), est libre et est mobile entre une position ouverte et, deux positions fermées qui sont situées de part et d'autre de la position ouverte, de façon que l'un ou l'autre couloir (62, 64) soit obturé respectivement.

8. Système d'admission selon la revendication précédente, **caractérisé en ce que** la lame de séparation (60) comporte deux parties dont l'une (86) est fixe et dont l'autre (88) est articulée autour d'un axe (90) de façon à former des moyens d'obturation (80).

9. Système d'admission selon la revendication précédente, **caractérisé en ce que** la partie aval (86) de la lame de séparation est fixe, et **en ce que** sa partie amont (88) est mobile.

10. Système d'admission selon l'une quelconque des revendications 4 à 9, **caractérisé en ce que** lorsque les moyens d'obturation (80) obturent au moins partiellement le couloir (62) correspondant au tronçon aval (28) de l'orifice d'entrée (32) qui est ouvert, le flux de gaz qui circule dans le couloir (64) correspondant au tronçon aval (30) de l'orifice d'entrée (34) qui est au moins partiellement obturé, traverse la zone de passage (66) vers l'autre couloir (62) de façon que le débit des gaz soit plus élevé dans une zone d'admission (68) du tronçon aval (28) de l'orifice d'entrée (32) qui est ouvert.
